(19) Europäisches Patentamt
European Patent Office
Office européen des brevets

(11) **EP 1 394 052 B1**

(12) **FASCICULE DE BREVET EUROPEEN**

(45) Date de publication et mention
de la délivrance du brevet:
**18.04.2007 Bulletin 2007/16**

(51) Int Cl.:
***B65D 1/00*** *(2006.01)* ***A45D 34/00*** *(2006.01)*

(21) Numéro de dépôt: **03292123.1**

(22) Date de dépôt: **28.08.2003**

(54) **Récipient**

Behälter

Container

(84) Etats contractants désignés:
**DE ES FR GB IT**

(30) Priorité: **30.08.2002 FR 0210806**
**30.08.2002 FR 0210807**

(43) Date de publication de la demande:
**03.03.2004 Bulletin 2004/10**

(73) Titulaire: **L'ORÉAL**
**75008 Paris (FR)**

(72) Inventeur: **Balzeau, Pascal**
**94550 Cheville Larue (FR)**

(74) Mandataire: **Tanty, François**
**Nony & Associés,**
**3, rue de Penthièvre**
**75008 Paris (FR)**

(56) Documents cités:
| | |
|---|---|
| **FR-A- 370 650** | **FR-A- 685 063** |
| **FR-A- 697 421** | **FR-A- 2 688 431** |
| **GB-A- 595 638** | **US-A- 4 768 688** |
| **US-B1- 6 227 392** | **US-B1- 6 290 094** |

Printed by Jouve, 75001 PARIS (FR)

**Description**

La présente invention concerne les récipients, et notamment ceux destinés à contenir un produit cosmétique ou de soin.

Par « produit cosmétique », on entend au sens de la présente invention un produit tel que défini dans la Directive 93/35/CEE du 14 juin 1993 modifiant la Directive 76/768/CEE.

On connaît de FR 685 063 un flacon en verre présentant un corps de forme arrondie dans lequel est prévue une ouverture sans col pour la sortie du produit, cette ouverture étant fermée par un bouchon C rapporté sur le récipient.

Le brevet US 4 768 688 concerne un récipient sous forme de bracelet, en matière polymère, destiné à contenir une lotion solaire.

Il existe un besoin pour bénéficier de récipients aisément transportables, par exemple dans un sac à main, et offrant une contenance répondant aux exigences des consommateurs.

La présente invention vise, selon l'un de ses aspects, à répondre à ce besoin.

Elle y parvient grâce à un récipient comportant :

- un corps en verre ou en céramique présentant un renfoncement,
- un col d'axe X s'étendant entre une première extrémité située axialement au niveau d'une paroi délimitant le renfoncement et une seconde extrémité, le col s'étendant sur sensiblement toute sa hauteur à l'intérieur du renfoncement, le col et le corps étant réalisés d'une seule pièce.

Par « sensiblement toute sa hauteur », on entend au moins 50 % de sa hauteur, de préférence 75 %, et encore de préférence 90 %.

Le col peut s'étendre en intégralité à l'intérieur du renfoncement.

Le col peut s'étendre à partir du fond du renfoncement. En variante, le col peut s'étendre à partir d'une région du renfoncement qui ne correspond pas au fond du renfoncement.

L'invention permet de réduire l'encombrement du récipient, mesuré selon l'axe du col, comparativement à un récipient connu tel que par exemple divulgué par le brevet US 6 227 392.

En outre, l'invention accroît, sur le plan esthétique, les possibilités de réalisation de formes originales.

Dans un exemple de mise en oeuvre de l'invention, le renfoncement s'étend selon un axe transversal à l'axe du col, par exemple perpendiculaire à l'axe du col. Le renfoncement peut présenter une surface cylindrique, de génératrice sensiblement perpendiculaire à l'axe du col, de directrice circulaire ou non. Une telle configuration du renfoncement facilite le démoulage du col lors de la fabrication du récipient par soufflage.

Le renfoncement peut aussi présenter une surface non cylindrique, ce qui est le cas notamment lorsque le renfoncement présente une forme de coupelle.

La profondeur du renfoncement du récipient peut être supérieure à 2 mm, voire supérieure à 5 ou 10 mm.

Le récipient peut contenir un produit cosmétique ou de soin.

Le récipient peut comporter un organe de fermeture configuré pour fermer de manière étanche le récipient, tel qu'un bouchon par exemple. Un tel organe de fermeture peut se fixer de diverses manières sur le col, par exemple par vissage, et le col peut alors comporter un filetage extérieur.

Le récipient peut aussi comporter un organe de distribution tel qu'une pompe ou une valve.

Le corps de récipient peut être muni d'une ouverture unique.

L'organe de fermeture ou de distribution peut s'étendre au-dessus du renfoncement. Il peut toutefois être souhaitable, pour diminuer l'encombrement et améliorer l'esthétique, que l'organe de fermeture ou de distribution s'étende en intégralité à l'intérieur du renfoncement.

L'invention a encore pour objet, selon un autre de ses aspects, un procédé de fabrication d'un récipient en verre ou en céramique, comportant les étapes suivantes :

- réaliser une préforme avec un moule comportant deux parties configurées pour former le col du récipient,
- souffler la préforme pour former le corps du récipient, ce corps comportant un renfoncement configuré pour permettre le démoulage du col par écartement des deux parties précitées.

L'invention pourra être mieux comprise à la lecture de la description détaillée qui va suivre, d'exemples de mise en oeuvre non limitatifs de l'invention, et à l'examen du dessin annexé, sur lequel :

- la figure 1 représente, de manière schématique et en perspective, un récipient conforme à un exemple de récipient destiné à contenir un produit cosmétique ou de soin,
- la figure 2 représente le récipient de la figure 1 après enlèvement de l'organe de distribution monté sur le col,
- la figure 3 est une vue de dessus du récipient selon la flèche III de la figure 2,
- la figure 4 est une coupe axiale schématique selon IV-IV de la figure 3,
- la figure 5 représente de manière schématique et en perspective une variante du récipient de la figure 2, équipée d'un organe de fermeture,
- la figure 6 représente une autre variante de récipient,

- la figure 7 représente le récipient de la figure 6, après enlèvement de l'organe de distribution,
- la figure 8 est une coupe axiale schématique du récipient de la figure 7,
- les figures 9 et 11 représentent de manière schématique et en perspective d'autres variantes de récipients,
- les figures 10 et 12 représentent respectivement les récipients des figures 9 et 11 en coupe axiale,
- la figure 13 représente un récipient conforme à la présente invention, de manière schématique,
- la figure 14 est une coupe axiale schématique selon XIV-XIV de la figure 13,
- la figure 15 représente, de manière schématique et en perspective, le récipient de la figure 13 ainsi que des éléments de moule utilisés pour sa fabrication,
- la figure 16 représente de manière schématique une variante du récipient de la figure 13, et
- les figures 17, 18 et 19 représentent respectivement, de manière schématique, des variantes des récipients des figures 8, 10 et 12, en coupe axiale.

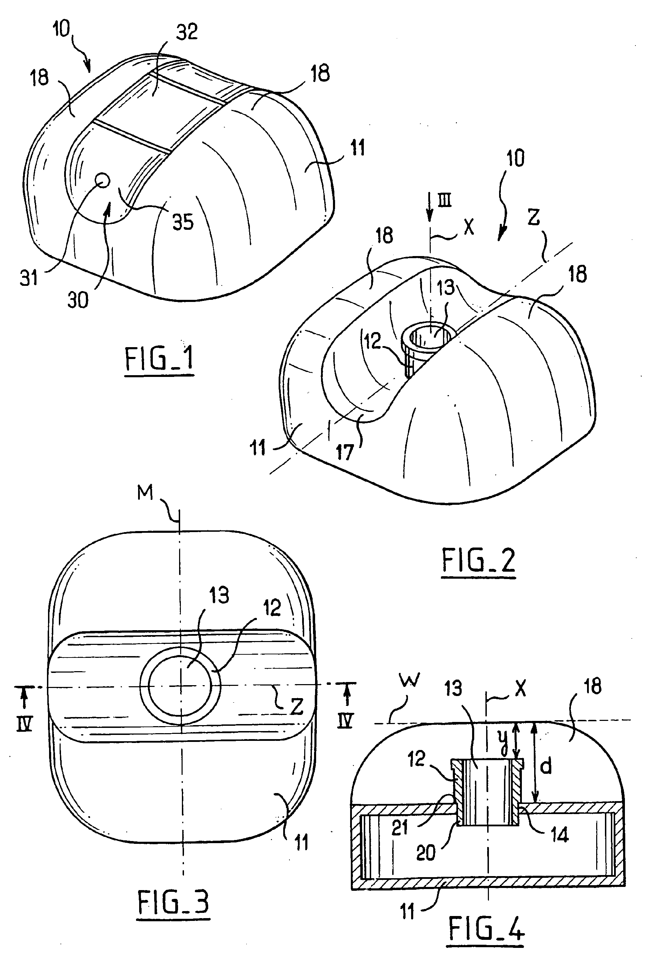

On a représenté aux figures 1 à 4 un récipient 10 comportant un corps 11 et un col 12 pourvu d'un passage 13 pour la sortie du produit contenu dans le corps 11, par exemple un parfum.

Le corps 11 est réalisé d'une seule pièce par moulage de matière, à savoir une matière minérale telle que par exemple un verre au quartz ou du cristal, dans l'exemple considéré. D'autres matériaux pourraient encore être utilisés pour réaliser le corps 11, par exemple de la porcelaine ou du grès, voire une matière organique, par exemple une matière thermoplastique.

Le corps 11 est pourvu d'une ouverture 14 qui peut être par exemple circulaire.

Le corps 11 est également réalisé avec un renfoncement 17 qui s'étend entre deux parties surélevées 18 du corps 11, chacune capable de contenir du produit.

Dans l'exemple considéré, l'ouverture 14 est située dans le fond du renfoncement 17, le centre de l'ouverture 14 étant situé dans un plan médian M pour le récipient, ce plan médian M étant perpendiculaire à l'axe longitudinal Z du renfoncement 17.

Dans l'exemple considéré, le renfoncement 17 présente une surface qui est cylindrique, de génératrice parallèle à l'axe Z, de directrice circulaire ou non. La profondeur d du renfoncement 17, mesurée entre le fond de celui-ci et un plan W perpendiculaire à l'axe X et tangent au corps 11 est par exemple supérieure ou égale à 10 mm, et la distance y séparant l'extrémité libre du col 12 de ce plan W, toujours mesurée selon l'axe X, est par exemple supérieure ou égale à 5 mm.

Le col 12 est formé par un insert 20 qui est fixé dans l'ouverture 14. Cet insert 20 peut être réalisé dans le même matériau que le corps 11 du récipient ou en variante, dans un matériau différent. L'insert 20 peut notamment être réalisé dans une matière plastique lorsque le corps 11 du récipient est en verre ou en céramique.

Dans l'exemple considéré, l'insert 20 présente un épaulement 21 qui vient en appui contre la paroi du corps 11 bordant l'ouverture 14. L'insert 20 peut être fixé de diverses manières sur le corps 11 et notamment être fixé par emmanchement à force ou par collage ou soudage, le mode de fixation étant éventuellement choisi en fonction de la nature du produit destiné à remplir le récipient.

Un organe de distribution 30 peut être rapporté dans le renfoncement 17 et fixé sur le col 12, comme on le voit à la figure 1.

Cet organe de distribution 30 peut comporter un capot 35 pourvu d'un orifice de distribution 31 et un bouton-poussoir 32 mobile par rapport au capot 35, pour actionner un mécanisme non apparent, tel qu'un mécanisme de pompe par exemple. L'utilisateur peut ainsi provoquer le départ de produit par l'orifice de distribution 31 à chaque enfoncement du bouton-poussoir 32.

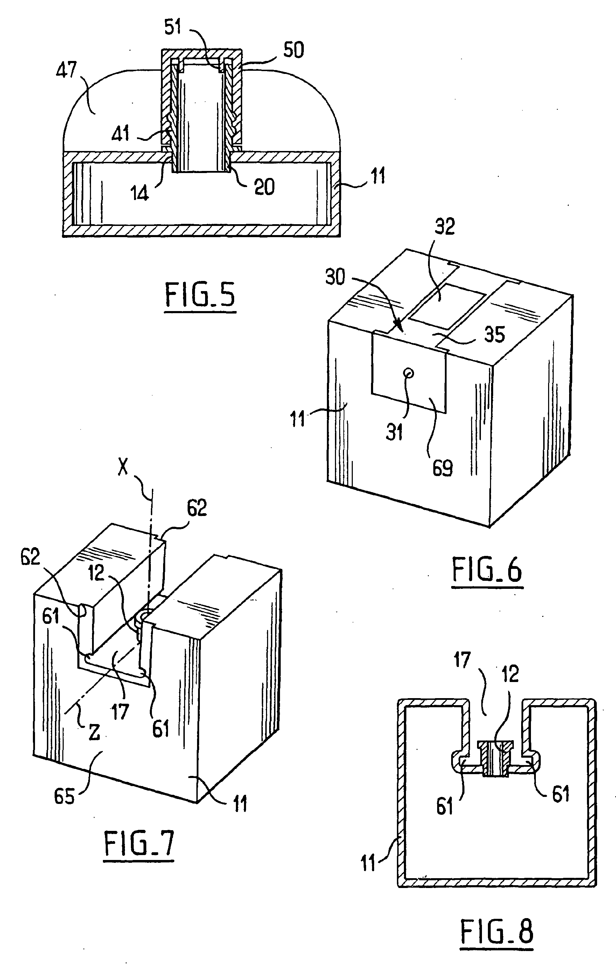

On peut aussi fixer dans l'ouverture 14 du corps 11 du récipient un insert 20 présentant une longueur suffisamment grande pour que le col fasse saillie hors du renfoncement 17, comme illustré à la figure 5.

L'insert 20 peut présenter un filetage extérieur 41 permettant par exemple le vissage d'un organe de fermeture 50 tel qu'un bouchon. Ce dernier peut comporter, comme représenté, une lèvre d'étanchéité 51 configurée pour s'appliquer contre la surface intérieure du col.

Bien entendu, on peut réaliser le corps du récipient avec d'autres formes encore sans que l'on sorte du cadre de la présente invention.

On a représenté sur les figures 6 à 8 un récipient présentant une forme générale sensiblement cubique.

Le corps 11 du récipient comporte, comme on peut le voir sur les figures 7 et 8, un renfoncement 17 qui présente en section dans un plan perpendiculaire à son axe longitudinal Z une forme générale rectangulaire avec, dans le fond du renfoncement 17, deux rainures longitudinales opposées 61.

On remarque à l'examen de la figure 7 que le corps 11 présente, sur chacune de ses faces 65 sur lesquelles débouche dans le sens longitudinal le renfoncement 17, un décrochement 62 dont la profondeur correspond à l'épaisseur d'une paroi 69 du capot 35.

Les rainures 61 servent à l'accrochage, par encliquetage, de pattes de fixation non représentées de l'organe de distribution 30.

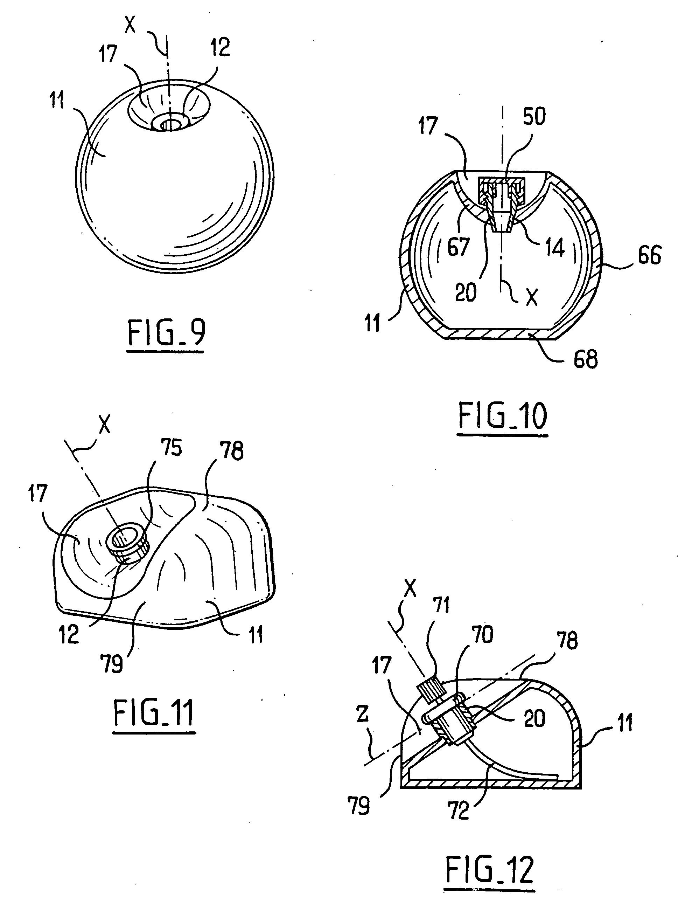

Le corps 11 du récipient représenté aux figures 9 et 10 présente un fond 68 aplati, prolongé vers le haut par une paroi latérale 66 en forme de portion de sphère, tronquée en partie supérieure.

Le renfoncement 17 présente dans cet exemple de réalisation une forme générale de coupelle, délimité par une paroi 67 concave vers le haut, pourvue en son fond d'une ouverture 14 recevant un insert fileté 20 destiné à constituer le col du récipient, sur lequel peut se visser un organe de fermeture 50.

Dans l'exemple des figures 9 et 10, la hauteur du col 12 est inférieure à la profondeur du renfoncement 17.

Dans tous les exemples qui viennent d'être décrits, l'axe X du col 12 est vertical lorsque le récipient repose sur une surface plane horizontale.

A titre d'exemple, on a représenté aux figures 11 et 12 un récipient ayant un renfoncement 17 dont le fond s'étend parallèlement à un axe longitudinal Z qui est non horizontal et qui est perpendiculaire à l'axe X du col 12.

Dans l'exemple considéré, le renfoncement 17 s'étend à une extrémité sur la face supérieure 78 du corps 11 du récipient et à l'extrémité opposée sur sa face frontale 79.

Le col 12 peut comporter un bourrelet annulaire 75 permettant la fixation, par exemple par sertissage, d'une valve ou d'une pompe 70 comportant un bouton-poussoir 71 pourvu d'un orifice de distribution non apparent et d'un tube plongeur 72.

Dans les exemples de réalisation des figures 1 à 12, le col du récipient est formé par un insert rapporté et fixé dans l'ouverture 14.

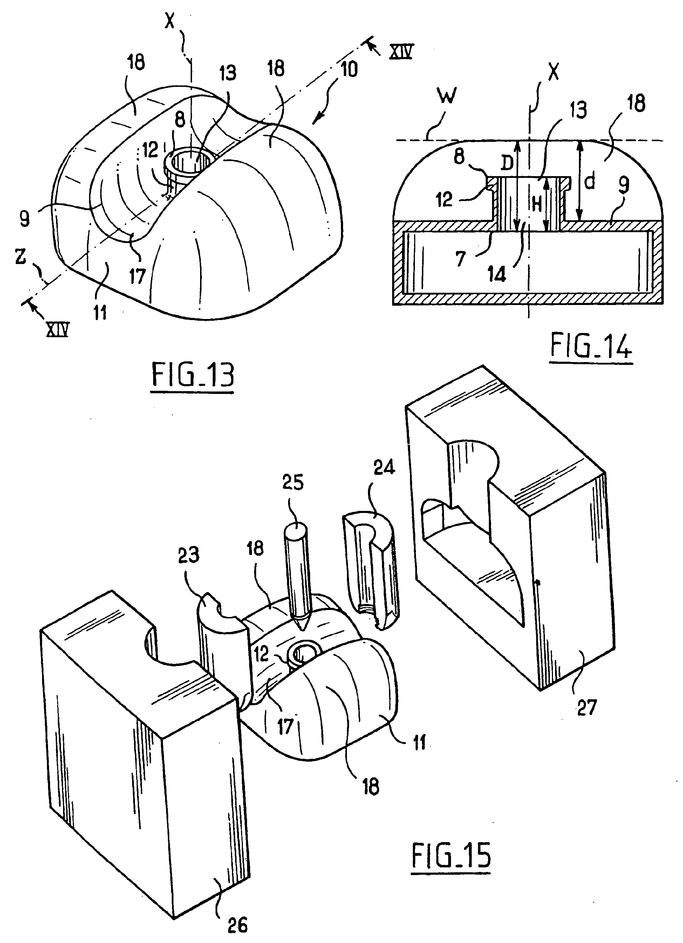

Selon la présente invention comme illustré sur les figures 13 et 14, le col 12 et le corps 11 du récipient sont réalisés d'une seule pièce.

Dans cet exemple, une paroi 9 du corps 11 délimite le renfoncement 17.

Le col 12 s'étend selon un axe X, vertical dans l'exemple considéré, entre une première extrémité 7 située au niveau de la paroi 9, et une seconde extrémité libre 8.

Dans l'exemple considéré, le col 12 s'étend à partir du fond du renfoncement 17, le centre de l'ouverture 14 étant situé dans un plan médian M pour le récipient, ce plan médian M étant perpendiculaire à l'axe d'une autre région de la paroi 9 du renfoncement.

Toujours dans l'exemple considéré, le renfoncement 17 présente une surface qui est cylindrique, de génératrice parallèle à l'axe Z. La distance D séparant la paroi 9 et le plan W perpendiculaire à l'axe X et tangent au corps 11, mesurée selon l'axe X, est par exemple supérieure ou égale à 5 mm, et la hauteur H du col, mesurée selon l'axe X, entre les extrémités 7 et 8 du col est par exemple inférieure à 5 mm. Le col 12 s'étend, dans ce mode de réalisation, intégralement à l'intérieur du renfoncement.

Pour réaliser le récipient des figures 13 et 14, on peut commencer, comme illustré sur la figure 15, par former une préforme avec un moule de bague comportant deux parties 23 et 24 que l'on assemble pour réaliser le col 12 du récipient. Ce moule comporte également un poinçon 25 configuré pour former le passage 13 du col 12.

La préforme est ensuite transportée dans un moule finisseur comportant deux parties 26 et 27, où elle est soufflée pour former le corps 11 du récipient.

Le col 12 est démoulé par écartement des parties 23 et 24 du moule de bague.

La présence du renfoncement 17 permet d'écarter les parties 23 et 24.

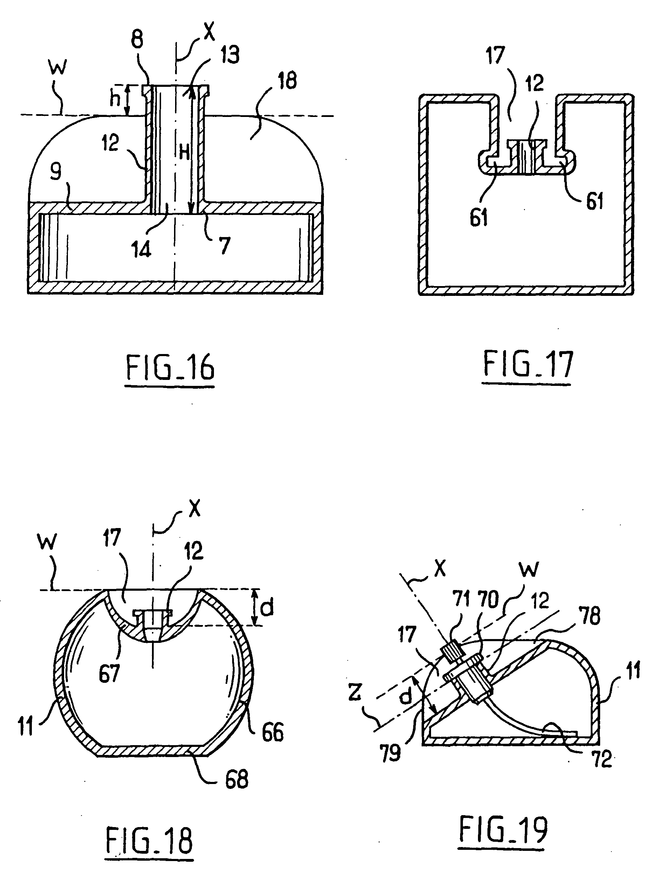

Le col 12 réalisé d'une seule pièce avec le corps 11 peut, dans une variante illustrée à la figure 16, s'étendre au-dessus du renfoncement 17 d'une hauteur $h$ mesurée selon l'axe X entre le plan W et l'extrémité libre 8 du col. La hauteur totale H du col étant mesurée entre les extrémités 7 et 8 du col 12 selon l'axe X. Le rapport $\dfrac{h}{H}$ est inférieur ou égal à 0,5, ce qui signifie qu'au moins 50 % de la hauteur du col 12 s'étend à l'intérieur du renfoncement.

Les récipients des figures 8, 10 et 12 comportent chacun un insert 20 fixé dans l'ouverture 14 du corps 11.

On a représenté aux figures 17, 18 et 19 les récipients des figures 8, 10 et 12 respectivement, comportant chacun un col 12 réalisé d'une seule pièce avec le corps 11 du récipient et non un insert. Ces récipients sont réalisés par exemple en suivant le mode de fabrication illustré par la figure 15.

L'invention n'est pas limitée aux exemples qui viennent d'être décrits.

En particulier, le corps du récipient peut présenter d'autres formes encore sans que l'on sorte du cadre de la présente invention, de même que le renfoncement et l'insert introduit dans l'ouverture du récipient.

Cet insert peut, le cas échéant, être réalisé d'une seule pièce avec un élément d'un mécanisme de distribution.

Les organes de fermeture et/ou de distribution peuvent présenter d'autres formes encore que celles illustrées.

Dans toute la description, y compris les revendications, l'expression « comportant un » doit être comprise comme étant synonyme de « comportant au moins un », sauf si le contraire est spécifié.

**Revendications**

1. Récipient (10) comportant :

   - un corps (11) réalisé en verre ou en céramique présentant un renfoncement (17), **caractérisé en ce que** récipient comporte aussi
   - un col (12) d'axe (X) s'étendant entre une première extrémité (7) située axialement au niveau d'une paroi (9) délimitant le renfoncement (17) et une seconde extrémité (8), le col (12) s'étendant sur sensiblement toute sa hauteur à l'intérieur du renfoncement (17), le col et le corps étant réalisés d'une seule pièce.

2. Récipient selon la revendication 1, **caractérisé par le fait que** le corps (11) de récipient est muni d'une ouverture unique (14).

**3.** Récipient selon la revendication 1, **caractérisé par le fait que** le corps (11) de récipient comporte un fond sur lequel le récipient peut reposer.

**4.** Récipient selon la revendication 1, **caractérisé par le fait que** le col (12) s'étend en intégralité à l'intérieur du renfoncement (17).

**5.** Récipient selon l'une des revendications 1 et 4, **caractérisé par le fait que** le col (12) s'étend à partir du fond du renfoncement (17).

**6.** Récipient selon l'une quelconque des revendications 1 à 5, **caractérisé par le fait que** le renfoncement (17) s'étend selon un axe (Z) transversal à l'axe (X) du col.

**7.** Récipient selon la revendication 6, **caractérisé par le fait que** le renfoncement (17) présente une surface cylindrique de génératrice sensiblement perpendiculaire à l'axe (X) du col.

**8.** Récipient selon l'une quelconque des revendications 1 à 5, **caractérisé par le fait que** le renfoncement (17) présente une surface non cylindrique.

**9.** Récipient selon la revendication 8, **caractérisé par le fait que** le renfoncement (17) présente une forme de coupelle.

**10.** Récipient selon l'une quelconque des revendications précédentes, **caractérisé par le fait que** la profondeur (d) du renfoncement est supérieure à 2 mm, de préférence 5 mm.

**11.** Récipient selon la revendication 10, **caractérisé par le fait que** la profondeur (d) du renfoncement est supérieure à 10 mm.

**12.** Récipient selon l'une quelconque des revendications précédentes, **caractérisé par le fait qu'**il contient un produit cosmétique ou de soin.

**13.** Récipient selon l'une quelconque des revendications précédentes, **caractérisé par le fait qu'**il comporte un organe de fermeture (50) configuré pour fermer de manière étanche le récipient.

**14.** Récipient selon l'une quelconque des revendications 1 à 13, **caractérisé par le fait que** le col (12) comporte un filetage extérieur (41).

**15.** Récipient selon l'une quelconque des revendications 1 à 12, **caractérisé par le fait qu'**il comporte un organe de distribution (30 ; 70) tel qu'une pompe ou une valve.

**16.** Récipient selon l'une quelconque des revendications 13 à 15, **caractérisé par le fait que** l'organe de fermeture ou de distribution s'étend en intégralité à l'intérieur du renfoncement (17).

**17.** Procédé de fabrication d'un récipient en verre ou en céramique selon l'une quelconque des revendications 1 à 16, comportant les étapes suivantes :

- réaliser une préforme avec un moule comportant deux parties (23, 24) configurées pour former le col (12) du récipient, ledit col comportant un axe et s'étendant entre une première extrémité (7) située axialement au niveau d'une paroi (9) délimitant le renfoncement (17) et une seconde extrémité (8), le col (12) s'étendant sur sensiblement toute sa hauteur à l'intérieur du renfoncement (17), le col et le corps étant réalisés d'une seule pièce.
- souffler la préforme pour former le corps (11) du récipient, ce corps comportant un renfoncement (17) configuré pour permettre le démoulage du col (12) par écartement des deux parties (23, 24).

**Claims**

**1.** A receptacle (10) comprising:

- a body (11) made of one of glass and ceramic and presenting a setback (17), **characterized by** the fact that this receptacle also comprises,
- a neck (12) of axis (X) extending between a first end (7) situated axially level with a wall (9) defining the setback (17)and a second end (8), the neck (12) having a height, the neck (12) extending over substantially the entire height inside the setback (17), the neck and the body being made as a single piece.

**2.** A receptacle according to claim 1, **characterized by** the fact that the receptacle body (11) is provided with a single opening (14).

**3.** A receptacle according to claim 1, **characterized by** the fact that the receptacle body (11) comprises a bottom on which the receptacle can be placed.

**4.** A receptacle according to claim 1, **characterized by** the fact that the neck (12) extends entirely inside the setback (17).

**5.** A receptacle according to any of claims 1 and 4, **characterized by** the fact that the neck (12) extends from the bottom of the setback (17).

**6.** A receptacle according to any of claims 1 to 5, **char-**

**acterized by** the fact that the setback (17) extends along an axis (Z) extending transversely to the axis (X) of the neck.

7. A receptacle according to claim 6, **characterized by** the fact that the setback (17) presents a cylindrical surface of generator lines that are substantially perpendicular to the axis (X) of the neck.

8. A receptacle according to any of claims 1 to 5, **characterized by** the fact that the setback (17) presents a surface that is not cylindrical.

9. A receptacle according to claim 8, **characterized by** the fact that the setback (17) is in the form of a cup.

10. A receptacle according to any one of the preceding claims, **characterized by** the fact that the depth (d) of the setback is greater than 2 mm, preferably greater than 5 mm.

11. A receptacle according to claim 10, **characterized by** the fact that the depth (d) of the setback is greater than 10 mm.

12. A receptacle according to any one of the preceding claims, **characterized by** the fact that the receptacle contains a cosmetic or a care product.

13. A receptacle according to any one of the preceding claims, **characterized by** the fact that the receptacle includes a closure member (50) configured to close the receptacle in leaktight manner.

14. A receptacle according to any of claims 1 to 13, **characterized by** the fact that the neck (12) includes an outside thread (41).

15. A receptacle according to any of claims 1 to 12, **characterized by** the fact that the receptacle includes a dispenser member (30;70) made by one of a pump or a valve.

16. A receptacle according to any of claims 13 to 15, **characterized by** the fact that the closure member or the dispenser member extends entirely inside the setback (17).

17. A method of manufacturing a receptacle made of glass or ceramic according to any of claims 1 to 16, comprising the following steps :

    - making a preform using a mold comprising two parts (23,24) configured to form the neck (12) of the receptacle, said neck comprising an axis and extending between a first end (7) situated axially level with a wall (9) defining the setback (17)and a second end (8), the neck (12) having a height, the neck (12) extending over substantially the entire height inside the setback (17), the neck and the body being made as a single piece,

    - blowing the preform so as to form the body (11) of the receptacle, said body including a setback (17) configured to allow the neck (12) to be unmolded by moving the two parts (23,24) apart.

**Patentansprüche**

1. Behälter (10), umfassend:

    - einen aus Glas oder aus Keramik hergestellten Körper (11) mit einer Vertiefung (17),

    **dadurch gekennzeichnet, dass** dieser Behälter auch umfasst:

    - einen Hals (12) mit der Achse (X), der sich zwischen einem ersten Ende (7), das axial auf Höhe einer die Vertiefung (17) begrenzenden Wand (9) gelegen ist, und einem zweiten Ende (8)erstreckt, wobei der Hals (12) sich im Wesentlichen auf seiner ganzen Höhe im Inneren der Vertiefung (17) erstreckt, wobei der Hals und der Körper aus einem einzigen Stück hergestellt sind.

2. Behälter nach Anspruch 1, **dadurch gekennzeichnet, dass** der Behälterkörper (11) mit einer einzigen Öffnung (14) versehen ist.

3. Behälter nach Anspruch 1, **dadurch gekennzeichnet, dass** der Behälterkörper (11) einen Boden umfasst, auf dem der Behälter stehen kann.

4. Behälter nach Anspruch 1, **dadurch gekennzeichnet, dass** der Hals (12) sich vollständig im Inneren der Vertiefung (17) erstreckt.

5. Behälter nach einem der Ansprüche 1 und 4, **dadurch gekennzeichnet, dass** der Hals (12) sich vom Boden der Vertiefung (17) aus erstreckt.

6. Behälter nach einem der Ansprüche 1 bis 5, **dadurch gekennzeichnet, dass** die Vertiefung (17) sich gemäß einer zur Achse (X) des Halses quer verlaufenden Achse (Z) erstreckt.

7. Behälter nach Anspruch 6, **dadurch gekennzeichnet, dass** die Vertiefung (17) eine zylindrische Fläche mit einer zur Achse (X) des Halses im Wesentlichen senkrechten Erzeugenden aufweist.

8. Behälter nach einem der Ansprüche 1 bis 5, **dadurch gekennzeichnet, dass** die Vertiefung (17) eine nicht zylindrische Fläche aufweist.

9. Behälter nach Anspruch 8, **dadurch gekennzeichnet, dass** die Vertiefung (17) eine Schalenform aufweist.

10. Behälter nach einem der vorhergehenden Ansprüche, **dadurch gekennzeichnet, dass** die Tiefe (d) der Vertiefung größer als 2 mm, vorzugsweise 5 mm ist.

11. Behälter nach Anspruch 10, **dadurch gekennzeichnet, dass** die Tiefe (d) der Vertiefung größer als 10 mm ist.

12. Behälter nach einem der vorhergehenden Ansprüche, **dadurch gekennzeichnet, dass** er ein kosmetisches oder Pflegeprodukt enthält.

13. Behälter nach einem der vorhergehenden Ansprüche, **dadurch gekennzeichnet, dass** er ein Verschlussorgan (50) umfasst, das ausgebildet ist, um den Behälter dicht zu verschließen.

14. Behälter nach einem der Ansprüche 1 bis 13, **dadurch gekennzeichnet, dass** der Hals (12) ein Außengewinde (41) umfasst.

15. Behälter nach einem der Ansprüche 1 bis 12, **dadurch gekennzeichnet, dass** er ein Abgabeorgan (30; 70) wie eine Pumpe oder ein Ventil umfasst.

16. Behälter nach einem der Ansprüche 13 bis 15, **dadurch gekennzeichnet, dass** das Verschluss- oder Abgabeorgan sich vollständig im Inneren der Vertiefung (17) erstreckt.

17. Verfahren zur Herstellung eines Behälters aus Glas oder aus Keramik nach einem der Ansprüche 1 bis 16, umfassend die folgenden Schritte:

   - eine Vorform mit einer Form herstellen, die zwei Teile (23, 24) umfasst, die ausgebildet sind, um den Hals (12) des Behälters zu bilden, wobei dieser Hals eine Achse umfasst und sich zwischen einem ersten Ende (7), das axial auf Höhe einer die Vertiefung (17) begrenzenden Wand (9) gelegen ist, und einem zweiten Ende (8) erstreckt, wobei der Hals (12) sich im Wesentlichen auf seiner ganzen Höhe im Inneren der Vertiefung (17) erstreckt, wobei der Hals und der Körper aus einem einzigen Stück hergestellt sind,
   - die Vorform blasen, um den Körper (11) des Behälters zu formen, wobei dieser Körper eine Vertiefung (17) umfasst, die ausgebildet ist, um die Entformung des Halses (12) durch Entfernung der beiden Teile (23, 24) voneinander zu

gestatten.

FIG_1

FIG_2

FIG_3

FIG_4

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19